# EUROPEAN PATENT APPLICATION

(11) **EP 2 685 408 A1**
(43) Date of publication of application: **15.01.2014**
(21) Application number: 13170510.5
(22) Date of filing: 04.06.2013
(51) Int. Cl.: G06Q 10/00, G06F 15/16

(54) **Management server, image forming apparatus, method of providing open services gateway initiative (OSGI)-based service, and computer-readable recording medium**

(30) Priority: 25.06.2012 KR 20120068163
(71) Applicant: Samsung Electronics Co., Ltd, Gyeonggi-do 443-742 (KR)
(72) Inventor: Huang, Ki-young, Gyeonggi-do (KR)
(74) Representative: Taor, Simon Edward William

(57) **Abstract**

A management server includes a user interface unit to select a possible event of the management server as a first condition, selecting a second condition to filter an event corresponding to the selected first condition, and to select a function to be executed by the management server when the first condition and the second condition are satisfied; and a control unit to set the selected first condition, second condition, and function as a single new service in the management server. The first condition, the second condition, and the function each use a service engine of a bundle pre-installed on the OSGi.

## Description

The present general inventive concept relates generally to a management server, an image forming apparatus, a method for providing an Open Service Gateway Initiative (OSGi)-based service, and a computer-readable recording medium. More particularly, the present general inventive concept relates to a management server for providing a new service using a function provided in a pre-installed bundle in an OSGi framework, an image forming apparatus, a method for providing an OSGi-based service, and a computer-readable recording medium.

Rapid spread of digital technologies and Internet constructs digital home for providing a service which may be helpful to daily life of general users. Digital home technologies aim at providing more various services using external communication infrastructures well equipped, beyond mere home networking for sharing high speed Internet, file, and peripherals.

A representative service platform of such digital home technologies includes an Open Service Gateway initiative (OSGi) service platform operating based on a Java Virtual Machine. The OSGi provides basic services such as HTTP, service management, and log services, on the framework. Service providers provide services by distributing their respective services over the OSGi framework in the form of bundles. In particular, since the OSGi supports conventional home network technologies such as UPnP, Jini, and HAVi, it is applied in various environments such as TV set-top box, cable modem, alarm system, and energy management system.

The bundle used in the OSGi can export or import its function. Hence, expansion between the bundles is feasible, and reusability and function reassembly can be achieved based on their flexibility.

However, the related art provides merely methods for interworking between the bundles by reusing an interface between the bundles based on the function expansion and interworking, but does not provide a method allowing the user to create a new service by setting, connecting, storing and modifying the existing functions in person. The present general inventive concept provides a management server to provide a new service using a function provided in a pre-installed bundle in an OSGi framework, an image forming apparatus, a method of providing an OSGi-based service, and a computer-readable recording medium.

Additional features and utilities of the present general inventive concept will be set forth in part in the description which follows and, in part, will be obvious from the description, or may be learned by practice of the general inventive concept.

The foregoing features and utilities of the present general inventive concept may be achieved by providing a management server including a user interface unit to select a possible event of the management server as a first condition, to select a second condition to filter an event corresponding to the selected first condition, and to select a function to be executed by the management server when the first condition and the second condition are satisfied, and a control unit to set the selected first condition, second condition, and function as a single new service in the management server. The first condition, the second condition, and the function each may use a service engine of a bundle pre-installed on the OSGi.

The user interface unit may display a plurality of possible events of the management server, and select at least one of the displayed events as the first condition.

The event may be at least one of an event to detect a new image forming apparatus, an event to detect an alert in the image forming apparatus managed by the management server, an event to change a state of the image forming apparatus managed by the management server, an event to added a new image forming apparatus to a management group managed by the management server, and an event to remove an image forming apparatus from the management group managed by the management server.

When the first condition is satisfied, the user interface unit may display a plurality of filtering conditions for an event corresponding to the selected first condition, and select at least one of the displayed filter conditions as the second condition.

The user interface unit may display a plurality of functions supported by the management server, and select at least one of the displayed functions as a function to be executed by the management server when the first condition and the second condition are satisfied.

The control unit may generate a string command corresponding to the selected first condition, second condition, and function, and the user interface unit may display the generated string command.

The control unit may detect whether an event corresponding to the selected first condition occurs, using the service engine of the bundle corresponding to the first condition, and when the event corresponding to the first condition occurs, detect whether the event is in a status corresponding to the selected second condition, using the service engine of the bundle corresponding to the second condition.

When detecting the first condition and the second condition, the control unit may perform a service corresponding to the function using the service engine of the bundle corresponding to the function.

The management server may further include a generation unit to generate a virtual bundle which comprises only information for connection to the bundles corresponding to the selected first condition, second condition, and function, and an installation unit to install the generated virtual bundle on the OSGi framework.

The foregoing features and utilities of the present general inventive concept may also be achieved by providing an image forming apparatus including a user interface unit to select a possible event of the management server as a first condition, to select a second condition to filter an event corresponding to the selected first condition, and to select a function to be executed by the management server when the first condition and the second condition are satisfied, and a control unit to set the selected first condition, second condition, and function as a single new service in the image forming apparatus. The first condition, the second condition, and the function each may use a service engine of a bundle pre-installed on the OSGi.

The foregoing features and utilities of the present general inventive concept may also be achieved by providing a method of providing an Open Service Gateway Initiative (OSGi)-based service in a management server, the method including selecting a possible event of the management server as a first condition, electing a second condition to filter an event corresponding to the selected first condition, selecting a function to be executed by the management server when the first condition and the second condition are satisfied, and setting the selected first condition, second condition, and function as a single new service in the management server. The first condition, the second condition, and the function each may use a service engine of a bundle pre-installed on the OSGi.

The operation of selecting the first condition may display a plurality of possible events of the management server, and select at least one of the displayed events as the first condition.

The event may be at least one of an event to detect a new image forming apparatus, an event to detect an alert in the image forming apparatus managed by the management server, an event to change a state of the image forming apparatus managed by the management server, an event to add a new image forming apparatus to a management group managed by the management server, and an event to remove an image forming apparatus from the management group managed by the management server.

When the first condition is satisfied, the operation of selecting the second condition may display a plurality of filtering conditions for an event corresponding to the selected first condition, and select at least one of the displayed filter conditions as the second condition.

The operation of selecting the function may display a plurality of functions supported by the management server, and select at least one of the displayed functions as a function to be executed by the management server when the first condition and the second condition are satisfied.

The method may further include generating a string command corresponding to the selected first condition, second condition, and function, and displaying the generated string command.

The method may further include detecting whether the event corresponding to the selected first condition occurs, using the service engine of the bundle corresponding to the first condition; and when the event corresponding to the first condition occurs, and detecting whether the event is in a status corresponding to the selected second condition, using the service engine of the bundle corresponding to the second condition.

The method may further include when detecting the first condition and the second condition, performing a service corresponding to the function using the service engine of the bundle corresponding to the function.

The operation of setting in the management server may include generating a virtual bundle which comprises only information for connection to the bundles corresponding to the selected first condition, second condition, and function, and installing the generated virtual bundle on the OSGi framework.

The foregoing features and utilities of the present general inventive concept may also be achieved by providing a computer-readable recording medium containing computer-readable codes as a program to execute a method of providing an OSGi-based service, the method including selecting a possible event of a management server as a first condition, selecting a second condition to filter an event corresponding to the selected first condition, selecting a function to be executed by the management server when the first condition and the second condition are satisfied, and setting the selected first condition, second condition, and function as a single new service in the management server. The first condition, the second condition, and the function each may use a service engine of a bundle pre-installed on the OSGi.

According to an aspect of the invention, there is provided a management server as set out in claim 1. Preferred features are set out in claims 2 to 9.

According to another aspect of the invention, there is provided an image forming apparatus as set out in claim 10.

According to another aspect of the invention, there is provided a method of providing an Open Service Gateway Initiative (OSGi)-based service in a management server as set out in claim 11. Preferred features are set out in claims 12 to 15.

The foregoing features and utilities of the present general inventive concept may also be achieved by providing an image forming apparatus to perform a printing job based on an OSGi based service, the image forming apparatus including a printing unit to print an image on a printing medium, and a bundle unit configured to set up a bundle to control the printing unit, and the bundle unit comprising a user interface unit to provide a user interface window to select a possible event of the management server as a first condition, to select a second condition to filter an event corresponding to the selected first condition, and to select a function to be executed by the management server when the first condition and the second condition are satisfied, and a control unit to select the selected first condition, second condition, and function as a single new service in the image forming apparatus. The first condition, the second condition, and the function each may use a service engine of the bundle pre-installed on the OSGi.

These and/or other features and utilities of the present general inventive concept will become apparent and more readily appreciated from the following description of the embodiments, taken in conjunction with the accompanying drawings of which:
FIG. 1 is a diagram illustrating an image forming system according to an embodiment of the present general inventive concept;
FIG. 2 is a detailed block diagram illustrating a management server of the image forming system of FIG. 1;
FIG. 3 is a detailed block diagram illustrating an image forming apparatus of the image forming system of FIG. 1;
FIG. 4 is a diagram illustrating major rule-based components according to an embodiment of the present general inventive concept;
FIGS. 5 and 6 are diagrams illustrating relationships between the major rule based components of FIG. 4;
FIG. 7 is a flowchart illustrating a method of generating a new rule according to an embodiment of the present general inventive concept;
FIGS. 8 through 11 are diagrams illustrating a new bundle generation according to an embodiment of the present general inventive concept;
FIGS. 12 through 18 are diagrams illustrating user interface windows usable to generate a new rule according to an embodiment of the present general inventive concept;
FIG. 19 is a diagram illustrating a structure of a new bundle generated according to a new rule according to an embodiment of the present general inventive concept;
FIGS. 20 through 22 are diagrams illustrating a file structure of a bundle according to an embodiment of the present general inventive concept;
FIG. 23 is a flowchart illustrating a method of installing a service according to an embodiment of the present general inventive concept; and
FIG. 24 is a flowchart illustrating a method of providing a service according to an embodiment of the present general inventive concept.

Reference will now be made in detail to the embodiments of the present general inventive concept, examples of which are illustrated in the accompanying drawings, wherein like reference numerals refer to the like elements throughout. The embodiments are described below to explain the present general inventive concept by referring to the figures.

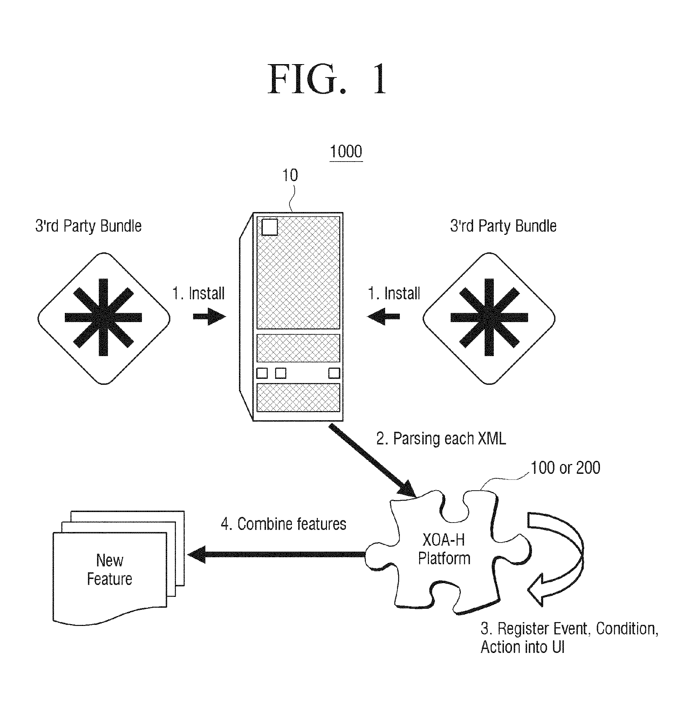

FIG. 1 is a diagram illustrating an image forming system 1000 according to an embodiment of the present general inventive concept.

Referring to FIG. 1, the image forming system 1000 includes an external server 10 and a management server 100 and/or an image forming apparatus 200.

The external server 10 can provide a bundle to the management server 100 or the image forming apparatus 200, and can be implemented using a server, a personal computer (PC), a Personal Digital Assistant (PDA), a mobile phone, a digital camera, a digital video camera, and a point of sale (POS) terminal.

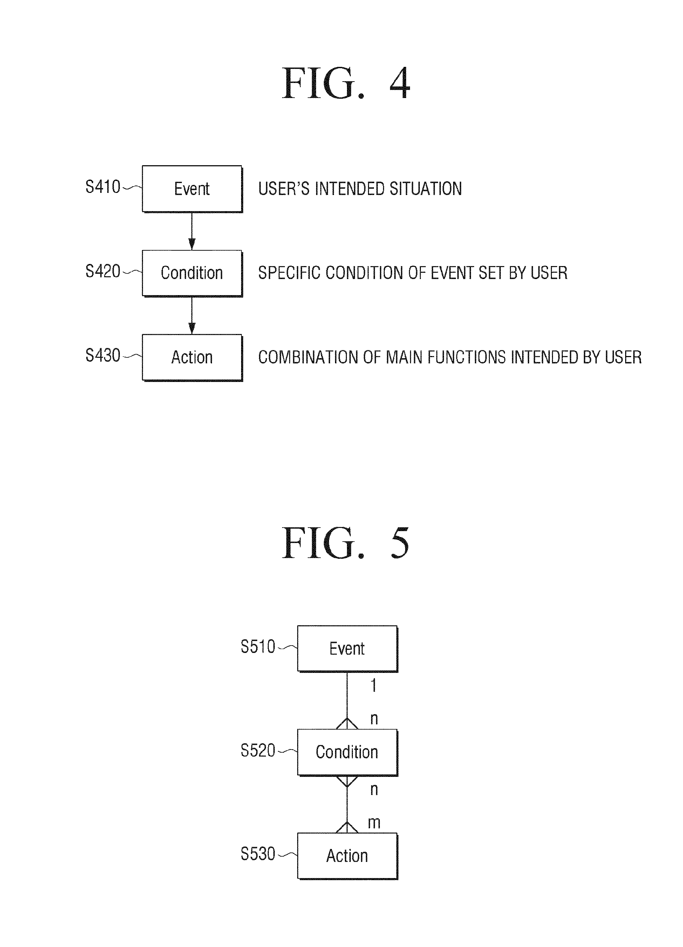

Herein, the bundle is a program created by one or more service providers to distribute their new services. The bundle shall be explained in detail by referring to FIG. 4.

The service indicates various functions provided by an OSGi-based apparatus. For example, when the OSGi-based apparatus is an image forming apparatus, various functions such as FAX, copying, and printing provided by the general image forming apparatus correspond to the services. The services also include a function which is not provided by the conventional image forming apparatus but supportable by installing the bundle, for example, a function for sending a FAX document to a particular mail. When the OSGi-based apparatus is a server, various functions provided by a general management server, such as security management for managing the connected image forming apparatus, and job counting correspond to the services. The services can be the functions as stated above, or the combination of the functions as stated above.

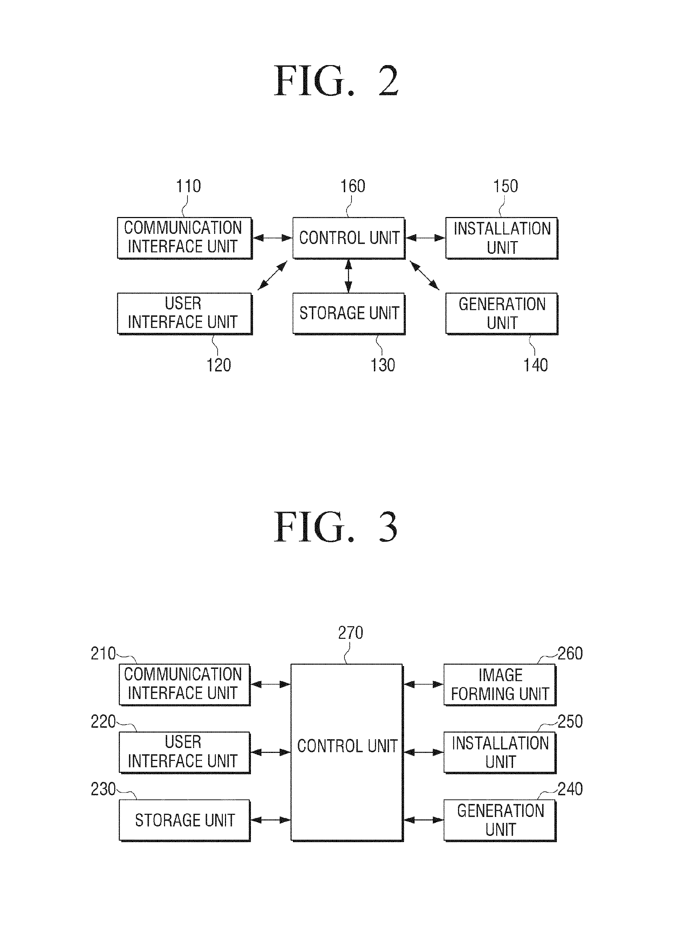

The management server 100 can receive the bundle from the external server 10 and install the received bundle on an OSGi framework. The management server 100 can receive a first condition, a second condition, and a function selected from a user (or an administrator), and set a new service on the OSGi framework using the selected first condition, second condition, and function. A detailed structure and functions of the management server 100 will be explained by referring to FIG. 2.

The image forming apparatus 200 can receive the bundle from the external server 10 and install the received bundle on the OSGi framework. Examples of the image forming apparatus can include a copier, a printer, a facsimile machine, or a MultiFunctional Peripheral (MFP) integrating functions of those devices into a single device. A detailed structure and functions of the image forming apparatus 200 will be explained by referring to FIG. 3.

When the management server 100 and the image forming apparatus 200 are connected to the external server 10, that is, when the image forming apparatus 200 is connected directly to the external server 10 of FIG. 1, the image forming apparatus 200 can be connected to the external server 10 via the management server 100. While the external server 10 and the management server 100 are separately equipped, the management server 100 may function as the external server 100.

FIG. 2 is a detailed block diagram illustrating the management server 100 of the image forming system 1000 of FIG. 1.

Referring to FIG. 2, the management server 100 can include a communication interface unit 110, a user interface unit 120, a storage unit 130, a generation unit 140, an installation unit 150, and a control unit 160.

The communication interface unit 110 connects the management server 100 to an external device (e.g., the external server 10 or the image forming apparatus 200), and allows access not only over a Local Area Network (LAN) and Internet but also via a Universal Serial Bus (USB) port and a wireless module.

The communication interface unit 110 can receive various information from the image forming apparatus 200. The communication interface unit 110 can receive various information (e.g., operation status information and device information of the corresponding apparatus) to manage the image forming apparatus 200, from the image forming apparatus 200.

The communication interface unit 110 can transmit a new bundle to the image forming apparatus 200. The communication interface unit 110 can send the new bundle received from the external server 10 or a virtual bundle generated by the generation unit 140, to be explained, to the image forming apparatus 200.

The communication interface unit 110 can send a service execution command to the image forming apparatus 200. The communication interface unit 110 can send the service execution command for executing a service which manages the connected image forming apparatus (e.g., a command for notifying status information, a command to notify job accounting information, and a command to change security status) to the image forming apparatus 200.

The communication interface unit 110 can receive a service execution result according to the transmitted service execution command, from the image forming apparatus 200.

The user interface unit 120 includes a plurality of function keys allowing a user to set or select various functions supported by the management server 100, and can display various information provided from the management server 100. The user interface unit 120 can be implemented using a device such as touch screen which realizes input and output at the same time, or a device which combines a mouse and a monitor.

Through a user interface window provided by the user interface unit 120, the user can select UI information to provide the new service and a plurality of functions for executing the new service. The user interface unit 120 can display functions of the bundles pre-installed on the OSGi framework and select a plurality of functions for executing the new service among the displayed functions. At this time, the user interface unit 120 can display the functions of the bundles pre-installed on the OSGi framework using a plurality of layers, for example, three layers. Herein, the UI information can be a new user interface window image and UI information (i.e., of which bundle the UI is used, or the display location on the corresponding UI when particular information is displayed) of the bundles pre-installed on the OSGi framework.

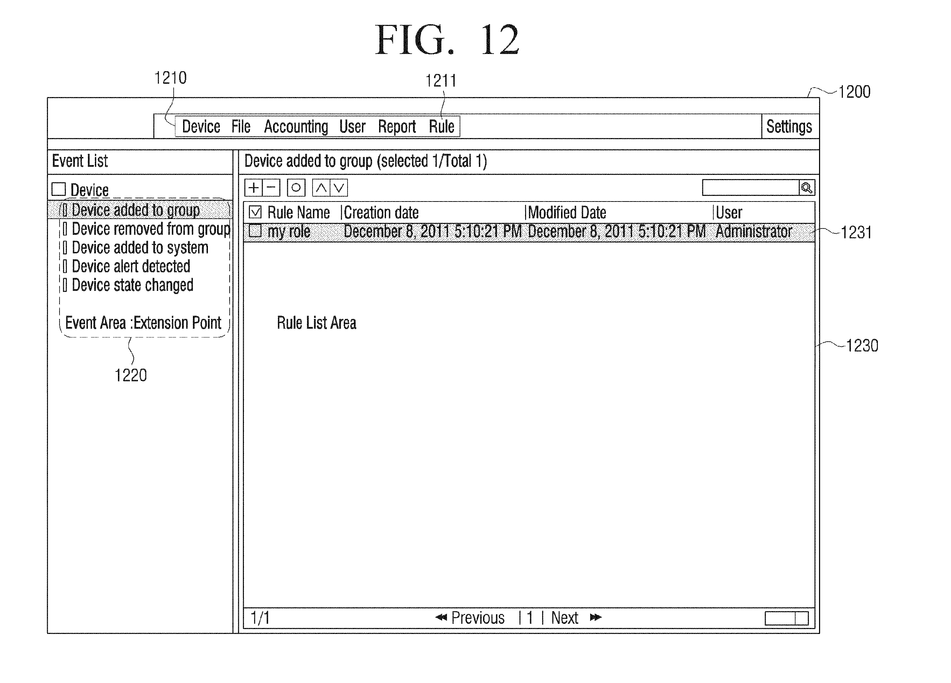

Herein, the three layers may include a first condition, a second condition, and a function. In this case, the user can select the first condition, the second condition, and the function to generate the new service through the user interface window provided by the user interface unit 120. Herein, the first condition is a possible event of the management server 100, the second condition is a condition to filter (or select) an event corresponding to the first condition, and the function indicates a function executable by the management server 100. The user interface window provided by the user interface unit 120 will be described by referring to FIGS. 12 through 18.

The user interface unit 120 can display the service execution result corresponding to the user service execution command or the new service generated by the user.

The storage unit 130 stores the bundle. The storage unit 130 can store the virtual bundle generated by the generation unit 140 to be explained.

The storage unit 130 can store event information, filtering information, and function information. Herein, the event information is information relating to the possible event of the management server and can include an event occurrence condition and bundle information for generating the event. The filtering condition information is information for filtering when the event corresponding to the first condition occurs, and can include a filtering condition and bundle information for determining the filtering. The function information is information about the function of the management server, and can include an executable function name and bundle information for the corresponding function.

The storage unit 130 can store management information. In detail, to manage the connected image forming apparatus 200, the storage unit 130 can store the information received from the image forming apparatus 200 via the communication interface unit 110, as the management information.

The storage unit 130 can be a memory embedded to the management server 100, for example, a ROM, a flash memory, or an HDD, and may be an external HDD or a memory card connected to the management server 100, for example, a flash memory (M/S, xD, or SD) or a USB memory.

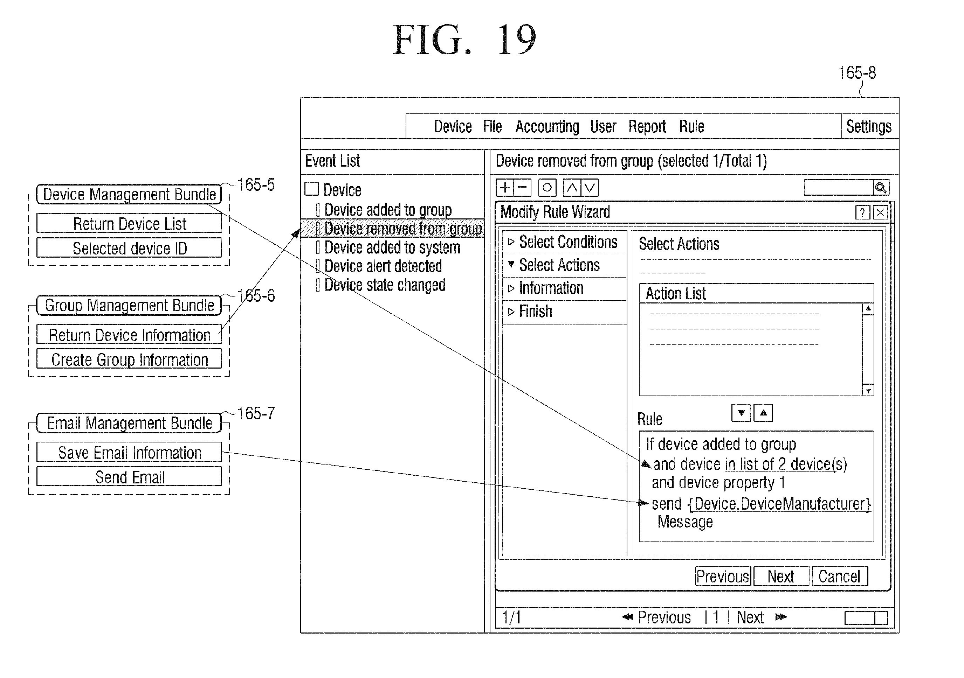

The generation unit 140 generates a virtual bundle. The generation unit 140 can generate the virtual bundle including the UI information to provide the new service selected through the user interface unit 120 and the plurality of the functions to execute the new service. For example, when the first condition, the second condition, and the function are selected through the user interface window, the generation unit 140 can generate a string command corresponding to the first condition, the second condition, and the function selected through the user interface unit 120, and generate the virtual bundle including connection information of the bundle corresponding to the first condition, connection information of the bundle corresponding to the second condition, and connection information of the bundle corresponding to the function using the generated string command. The virtual bundle generation will be described in detail by referring to FIGS. 19 through 22.

The installation unit 150 installs the bundle on the OSGi framework. The installation unit 150 can install the virtual bundle generated by the generation unit 140 or the new bundle received via the communication interface unit 110, on the OSGi framework.

The control unit 160 controls the components of the management server 100. The control unit 160, upon receiving a new service generation command from the user, can control the user interface unit 120 to display the user interface window to select the UI information and the functions. For example, when the new service is generated based on a rule (or one or more rules) according to an embodiment of the present general inventive concept, the control unit 160 can control the user interface unit 120 to display the user interface window to select the first condition, the second condition, and the function.

When the UI information and the functions are selected through the user interface unit 120, the control unit 160 can generate the generation unit 140 to generate the virtual bundle including the selected UI information and functions and control the installation unit 150 to install the generated virtual bundle on the OSGi framework. For example, when the new service is generated based on the rule according to an embodiment of the present general inventive concept, the control unit 160 can generate the generation unit 140 to generate the virtual bundle including the bundle connection information corresponding to the first condition, the second condition, and the function selected by the user, and the UI information, and control the installation unit 150 to install the generated virtual bundle on the OSGi framework.

The control unit 160 can provide the set new service. The control unit 160 can execute the plurality of the functions using a service engine of the bundle corresponding to the functions for the new service, and control the user interface unit 120 to display a plurality of execution results based on the UI information of the virtual bundle. For example, when the new service is generated based on the rule according to an embodiment of the present general inventive concept, the control unit 160 can detect whether the event corresponding to the selected first condition occurs, using the service engine of the bundle corresponding to the first condition. When the event corresponding to the first condition occurs, the control unit 160 can detect the status corresponding to the selected second condition, using the service engine of the bundle corresponding to the second condition. When the first condition and the second condition are satisfied, the control unit 160 can execute the service corresponding to the function using the service engine of the bundle corresponding to the first condition and the second condition.

As above, the management server 100 can generate the new service by selecting the first condition, the second condition, and the function through the user interface window, to thus enhance user convenience. The management server 100 can perform a finer function to filter on the main function using the second condition, rather than directly executing a particular function according to a particular event.

Meanwhile, while the generation unit 140, the installation unit 150, and the control unit 160 are separately equipped in FIG. 2, the functions of the generation unit 140, the installation unit 150, and the control unit 160 can be realized using one component in the implementation.

FIG. 3 is a detailed block diagram illustrating the image forming apparatus 200 of the image forming system 1000 of FIG. 1.

Referring to FIG. 3, the image forming apparatus 200 can include a communication interface unit 210, a user interface unit 220, a storage unit 230, a generation unit 240, an installation unit 250, an image forming unit 260, and a control unit 270.

The communication interface unit 210 connects the image forming apparatus 200 to an external device (e.g., the external server 10 or the management server 100), and allows the access not only over the LAN and the Internet but also via the USB port and the wireless module.

The communication interface unit 210 can receive a service execution command. The communication interface unit 210 can receive the service execution command (e.g., the command to notify the status information, the command to notify the job accounting information, and the command to change the security status) for the service to manage the connected image forming apparatus 200, from the management server 100.

The communication interface unit 210 can transmit the service execution result of the transmitted service execution command and various information to the management server 100. The communication interface unit 210 can transmit various information (e.g., the operation status information and the device information of the corresponding apparatus) required to manage the image forming apparatus 200, to the management server 100 according to a request of the management server 100 or at a preset time.

The communication interface unit 210 can receive a new bundle. The communication interface unit 210 can receive the new bundle from the external server 10 or the management server 100.

The user interface unit 220 includes a plurality of function keys to allow the user to set or select the various functions supported by the image forming apparatus 200, and can display the various information provided from the image forming apparatus 200. The user interface unit 220 can be implemented using a device such as a touch screen which realizes an input and an output at the same time, or a device which combines a mouse and a monitor.

Through a user interface window provided by the user interface unit 220, the user can select the UI information to provide the new service and the plurality of the functions to execute the new service. The user interface unit 220 can display the functions of the bundles pre-installed on the OSGi framework and select a plurality of functions to execute a new service among the displayed functions. At this time, the user interface unit 220 can display the functions of the bundles pre-installed on the OSGi framework using a plurality of layers, for example, three layers. Herein, the UI information can be the new user interface window image and the UI information (i.e., of which bundle the UI is used, or the display location on the corresponding UI when particular information is displayed) of the bundle pre-installed on the OSGi framework.

Herein, the three layers can include the first condition, the second condition, and the function. In this case, the user can select the first condition, the second condition, and the function to generate the new service through the user interface window provided by the user interface unit 220. Herein, the first condition is a possible event of the image forming apparatus 200, the second condition is a condition to filter (or select) an event corresponding to the first condition, and the function indicates a function executable by the image forming apparatus 200. The user interface window provided by the user interface unit 220 will be described by referring to FIGS. 12 through 18.

The user interface unit 220 can display the service execution result corresponding to the user service execution command or the new service generated by the user.

The storage unit 230 stores the bundle. The storage unit 230 can store the virtual bundle generated by the generation unit 240 to be explained later.

The storage unit 230 can store event information, filtering information, and function information. Herein, the event information is information relating to the possible event of the image forming apparatus 200 and can include an event occurrence condition and bundle information for generating the event. The filtering condition information is information to filter (or select) when the event corresponding to the first condition occurs, and can include a filtering condition and bundle information to determine the filtering. The function information is information about the function of the image forming apparatus 200, and can include an executable function name and bundle information for the corresponding function.

The storage unit 230 can be a memory embedded to the image forming apparatus 200, for example, a ROM, a flash memory, or an HDD, and may be an external HDD or a memory card connected to the image forming apparatus 200, for example, a flash memory (M/S, xD, or SD) or a USB memory.

The generation unit 240 generates the virtual bundle. In detail, the generation unit 240 can generate a string command corresponding to the first condition, the second condition, and the function selected through the user interface unit 220, and generate the virtual bundle including connection information of the bundle corresponding to the first condition, connection information of the bundle corresponding to the second condition, and connection information of the bundle corresponding to the function using the generated string command. The virtual bundle generation will be described in detail by referring to FIGS. 19 through 22.

The generation unit 240 generates the virtual bundle. The generation unit 240 can generate the virtual bundle including the UI information to provide the new service selected through the user interface unit 220 and the plurality of the functions to execute the new service. For example, when the first condition, the second condition, and the function are selected through the user interface window, the generation unit 240 can generate the string command corresponding to the first condition, the second condition, and the function selected through the user interface unit 220, and generate the virtual bundle including the connection information of the bundle corresponding to the first condition, the connection information of the bundle corresponding to the second condition, and the connection information of the bundle corresponding to the function using the generated string command. The virtual bundle generation will be described in detail by referring to FIGS. 19 through 22.

The installation unit 250 installs the bundle on the OSGi framework. The installation unit 250 can install the virtual bundle generated by the generation unit 240 or the new bundle received via the communication interface unit 210, on the OSGi framework.

The image forming unit 260 performs a printing job. When the service request command of the user relates to a printing service, the image forming unit 260 can perform the printing job according to the user's service request. It is possible that the image forming apparatus 200 includes only the image forming unit 260 as the function component. It is also possible that the image forming apparatus 200 may further include a fax component for a fax function and a scan component for a document scanning function.

The control unit 270 controls the components of the image forming apparatus 200. The control unit 270, upon receiving the new service generation command from the user, can control the user interface unit 220 to display the user interface window to select the UI information and the functions. For example, when the new service is generated based on the rule according to an embodiment of the present general inventive concept, the control unit 270 can control the user interface unit 220 to display the user interface window to select the first condition, the second condition, and the function.

When the UI information and the functions are selected through the user interface unit 220, the control unit 270 can control the generation unit 240 to generate the virtual bundle including the selected UI information and functions and control the installation unit 250 to install the generated virtual bundle on the OSGi framework. For example, when the new service is generated based on the rule according to an embodiment of the present general inventive concept, the control unit 270 can control the generation unit 240 to generate the virtual bundle including the bundle connection information corresponding to the first condition, the second condition, and the function selected by the user, and the UI information, and control the installation unit 250 to install the generated virtual bundle on the OSGi framework.

The control unit 270 can provide the set new service. The control unit 270 can execute the plurality of the functions using the service engine of the bundle corresponding to the functions for the new service, and control the user interface unit 220 to display a plurality of execution results based on the UI information of the virtual bundle. For example, when the new service is generated based on the rule according to an embodiment of the present general inventive concept, the control unit 270 can detect whether the event corresponding to the selected first condition occurs, using the service engine of the bundle corresponding to the first condition. When the event corresponding to the first condition occurs, the control unit 270 can detect the status corresponding to the selected second condition, using the service engine of the bundle corresponding to the second condition. When the first condition and the second condition are satisfied, the control unit 270 can execute the service corresponding to the function using the service engine of the bundle corresponding to the first condition and the second condition.

As described above, the image forming apparatus 200 can generate the new service by selecting the first condition, the second condition, and the function through the user interface window, to thus enhance the user convenience. The image forming apparatus 200 can perform the finer function to filter (or select) on the main function using the second condition, rather than directly executing a particular function according to a particular event.

It is possible that the generation unit 240, the installation unit 250, and the control unit 270 may be separately provided as described in FIG. 3. It is also possible that the functions of the generation unit 240, the installation unit 250, and the control unit 270 can be realized using one component in the implementation.

FIG. 4 is a diagram illustrating a rule usable in the image forming system 100 of FIG. 1, for example, one or more major rule-based components, according to an embodiment of the present general inventive concept.

For the combination of the user's desired functions, the system is divided largely into a plurality of major components, for example, three major components, to classify the main functions of the system and to generate the new function by the user in person based on the combination. A guide can be provided within an application to support the user to reconstruct the application including the category and the inheritance per current main function, which is divided into three major components.

The three major components may include a first condition (or an event) S410, a second condition (or a condition) S420, and a function (or an action) S430.

The first condition S410 may be a main function among the current functions. The first condition S410 declares the main function of a particular event desired by the user. When this event occurs, the first condition S410 executes the function by checking a lower second condition thereof. That is, the first condition S410 is the higher category area among the events.

The second condition S420 may be a specific condition subordinate to the first condition S410. The second condition S420 checks the condition set by the user when a particular event occurs, and instructs to notify to s next function when the condition is included. The second condition S420 can combine several conditions. For example, a plurality of specific parallel conditions can be added (i.e., a plurality of specific conditions can be added using an OR operation), a plurality of specific serial conditions can be added (i.e., a plurality of specific conditions can be added using an AND operation), and a plurality of specific serial/parallel conditions can be added.

The function S430, which is the actual function desired by the user, executes the particular function when the condition belongs to the second condition after the first condition takes place. The function S430 can combine several functions. That is, when the first condition and the second condition are satisfied, a plurality of functions can be executed at the same time.

The user can create a new service by easily understanding the given steps in the basic category region like a Wizard function and selecting his/her intended function and condition in each step, which shall be explained by referring to FIGS. 12 through 18. The components can be added or deleted based on XML per internal function of a third party bundle or an In-house bundle according to the main function of the OSGi open platform, and can generate the condition per distributed function and the final set-up flow of FIG. 4.

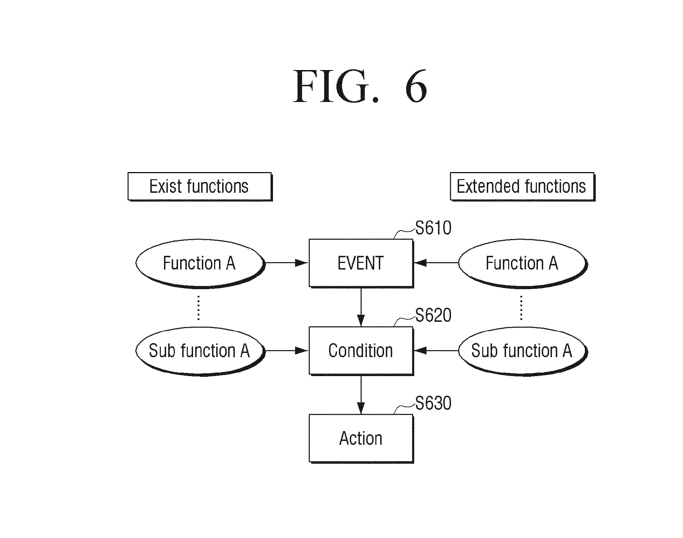

FIGS. 5 and 6 are diagrams illustrating relationships between the major components of Fig. 4.

Referring to FIGS. 5 and 6, the relationships of a first condition S510, a second condition S520, and a function S530 can build 1:n and n:m relationships based on the final functions. Here, n and m are integer.

The highest first condition S510 and second condition S520 may be in the 1:n relationship and can provide a user-oriented scenario by providing an easy and obvious relation guide for the understanding of the user. As such, the multiple second conditions S520 can be connected to one first condition S510, and the multiple functions can be connected to the second condition S520, to thus generate the rule.

Since the rule-based service according to an embodiment of the present general inventive concept includes the second condition S620, the user can be provided with more conditions S620 and S610 and subdivided functions (functions A and/or sub functions A).

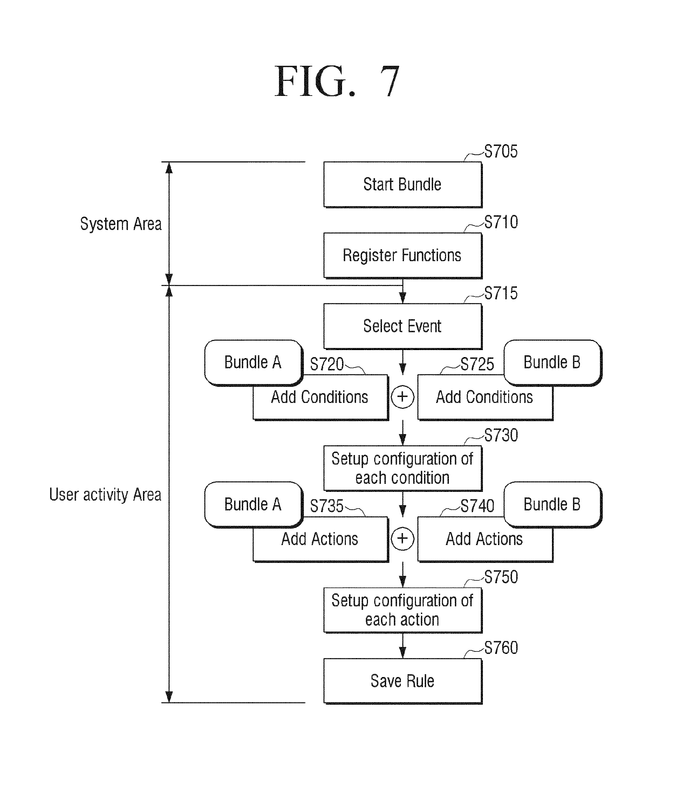

FIG. 7 is a flowchart illustrating a method of generating a new rule according to an embodiment of the present general inventive concept.

Referring to FIG. 7, the method can be divided largely into an operation of registering the function of each bundle to the OSGi framework and an operation of combining and storing the registered functions in view of the user.

The method starts the third party bundle and the bundle including the main function at operation S705.

The method includes an operation of registering the first condition, second condition, and function categories by parsing a file remoteui.xml declared in a folder Meta-INF at operation S710.

The user can select one of the plurality of the first conditions registered as an event selection at operation S715.

The plurality of the specific conditions subordinate to the first condition selected can be displayed and selected through a pop-up of each bundle at operations S720 and S725. A set-up operation is performed to set up a configuration of each condition at operation S730

The function to execute when the first condition and the second condition are satisfied is selected at operations S735 and S740.

The method sets a specific value required to perform the action as a configuration set-up of each action at operation S750, and declares and stores the name and the description of the established rule as a rule saving process at operation S760.

As illustrated in FIG. 7, the second condition and the function use a service engine of other bundle.

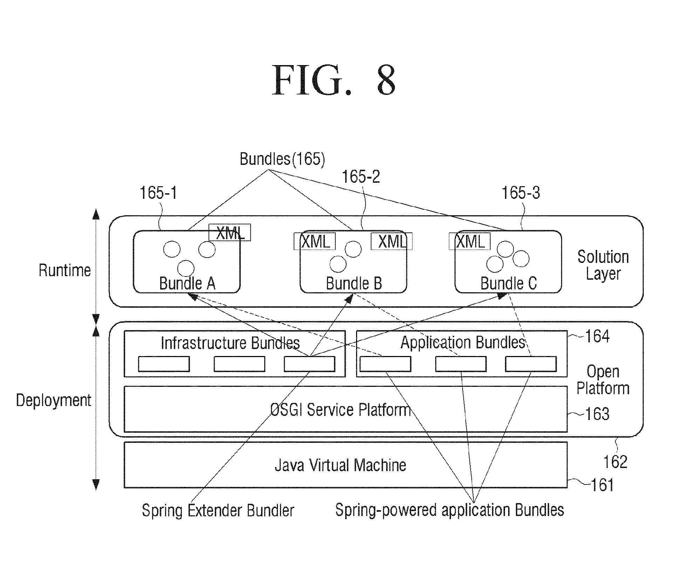

FIGS. 8 through 11 are diagrams illustrating a new bundle generation according to an embodiment of the present general inventive concept.

FIG. 8 is a diagram illustrating extendibility based on a server of a main architecture of a server platform in the OSGi technology.

Referring to FIGS. 1 through 8, the control unit 160 includes a Java virtual machine 161 and an OSGi platform 162.

The OSGi platform 162 operates based on the Java virtual machine 161, and includes an OSGi service platform 163 and a plurality of bundles 164. The bundles 164 may include one or more infrastructure bundles and/or one or more application bundles.

The OSGi service platform 163 provides basic services such as HTTP, service management, and log service, and can provide an extended service using the bundle 164 installed on the OSGi service platform.

Connections between the bundles 165 (165-1, 165-2, and 165-3) in a runtime of an upper part in the OSGi open platform (or the OSGi service platform) are defined based on an XML document. Hence, developers can generate and extend the bundle based on the basic software development kid (SDK), and extend and develop the function of the bundle by referring to the bundles using an open interface of the bundle. The reference information can be described in the XML for the connection between the bundles.

Using the reference information between the bundles, the new bundle, that is, the virtual bundle can be generated by reusing the main function of each bundle.

While the virtual bundle is viewed as a totally new bundle from the user, the developer can generate the virtual bundle by generating the UI and combining the existing functions.

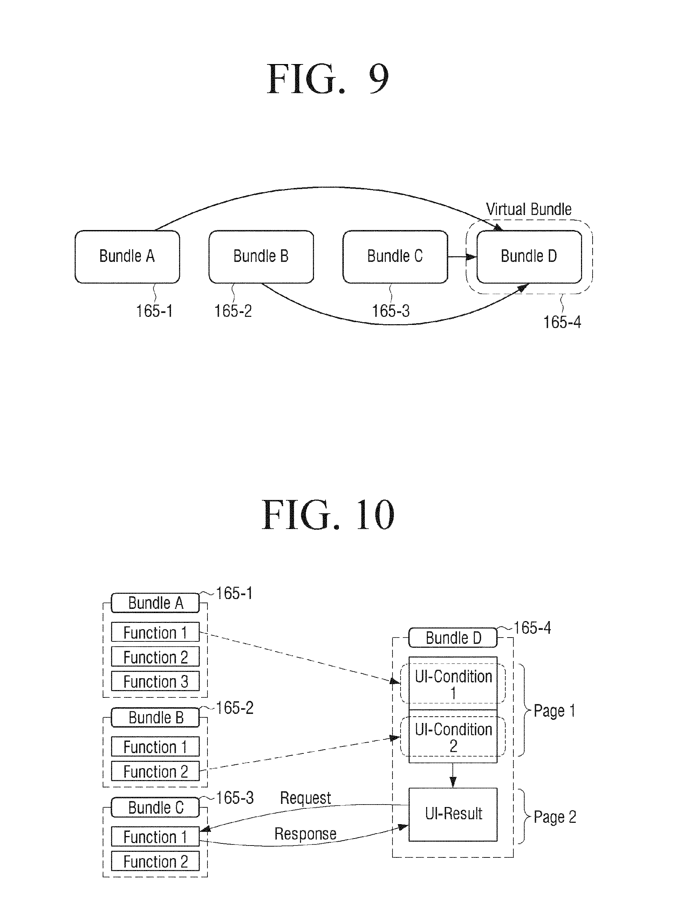

When the existing bundle or the other bundle includes a specific function required for the new service, the new bundle does not have to realize the same function and can be generated by combining the functions and reconstructing the UI. That is, when the new bundle is necessary as illustrated in FIG. 9, the virtual bundle 165-4 can be generated by importing the main functions of the existing bundles A, B and C 165-1, 165-2 and 165-3.

As such, the virtual bundle 165-4 does not require a business logic, and the new bundle can operate by combining the existing main functions. Thus, reliability can be improved by reusing a verified component and the time can be shorted by reusing one or more software components (or functions).

Hereafter, a detailed structure of a virtual bundle is described by referring to FIG. 10.

Referring to FIG. 10, the virtual bundle includes only the UI and is looked like the new function to the user by combing the existing functions on the UI screen.

The virtual bundle can include a page for combining and using various functions with the condition in one UI, and may include only the UI showing one simple result.

The virtual bundle includes two UIs as illustrated in FIG. 10, and the first UI requests the condition for a particular action. The result is returned from the other bundle and the two bundles A and B 165-1 and 165-2 are combined in one UI screen. When the user selects a user intended condition and then proceeds to the purpose thereof on the screen, the other bundle C 165-3 performs the operation and the result can be checked in the bundle D 165-4 including the UI showing only the result.

As a result, the user looks as if every function is processed in the virtual bundle 165-4, but the virtual bundle does not have the business logic at all. Such function extension can generate the new function within a short time and flexibly extend several services.

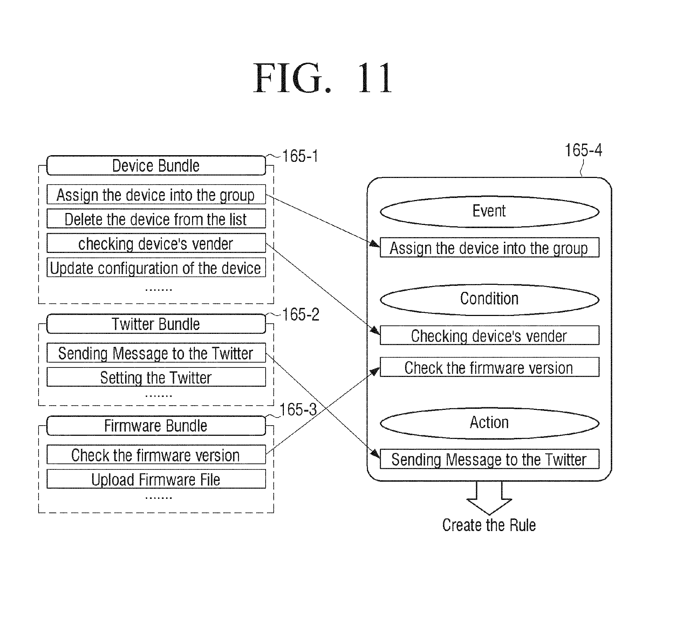

FIG. 11 is a diagram illustrating structures of bundles of FIG. 10 to provide a rule-based service according to an embodiment of the present general inventive concept.

Referring to FIG. 11, the virtual bundle 165-4 includes a first condition, two second conditions, and a function. The first condition uses the service engine of the bundle A 165-1, the second conditions use the service engine of the bundle A 165-1 and the service engine of the bundle C 165-3, and the function uses the service engine of the bundle B 165-2. For example, when the image forming apparatus is assigned to a particular group (the first condition) and the corresponding image forming apparatus matches a preset vender and a firmware version (the second condition), this situation can be messaged to the Twitter (the function).

FIGS. 12 through 18 are diagrams illustrating user interface windows usable to generate a new rule according to an embodiment of the present general inventive concept.

Referring to FIG. 12, a user interface unit (for example, the user interface unit 120 or 220 of FIG. 2 or 3) to generate a user interface window 1200 to include a first region 1210, a second region 1220, and a third region 1230.

The first region 1210 displays a service category provided by the management server 100 (or the image forming apparatus). The service category may include menus, for example, device, file, accounting, user, report, rule, etc. When a menu, for example, Rule 1211, is selected, the user interface window 1200 of FIG. 12 is displayed.

The second region 1220 receives the first condition. The second region 1220 can display a plurality of events generated in the management server (or the image forming apparatus). Herein, the event can include an event for detecting a new image forming apparatus, an event to detect an alert in the image forming apparatus managed by the management server, an event to change a state of the image forming apparatus managed by the management server, an event to add a new image forming apparatus to the management group managed by the management server, and an event to remove an image forming apparatus from the management group managed by the management server as illustrated in FIG. 12. When the present general inventive concept is applied to the image forming apparatus, other event than the above examples can be used as the first condition.

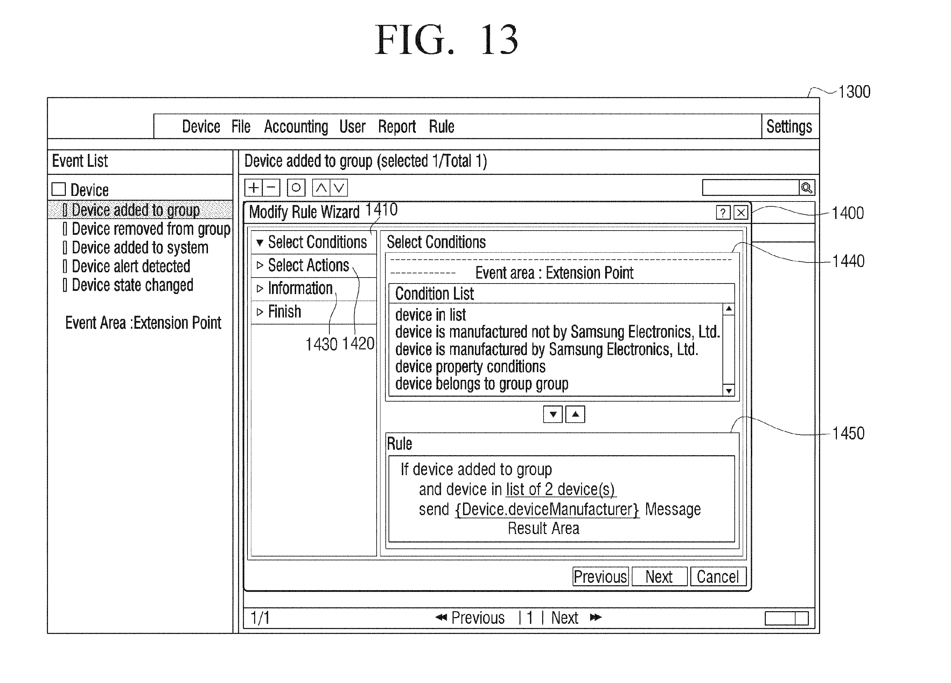

When one of the events is selected in the second region 1220, the user interface window 1300 of FIG. 13 can be displayed.

The third region 1230 displays a pre-generated new service, for example, a new service 1231 as illustrated in FIG. 12, and then a new window can be generated in the third region 1230 as a user interface window 1400 as illustrated in FIG. 13.

Referring to FIG. 13, the user interface window 1400 includes division regions 1410, 1420, and 1430, a region 1440 to select the second condition or the function, and a region 1450 to display a string command.

The division regions 1410, 1420, and 1430 change the item to be input on the region 1440 to select the second condition or the function. In FIG. 13, the region to select the second condition is displayed.

The region 1440 to select the second condition inputs the second condition. The region 1440 to select the second condition can display a plurality of filtering conditions corresponding to the event corresponding to the first condition selected, and select at least one of the filtering conditions. When the user selects the second condition in the displayed region, the string command corresponding to the selected first condition, the second condition, and the function is displayed in the region 1450 to display the string command.

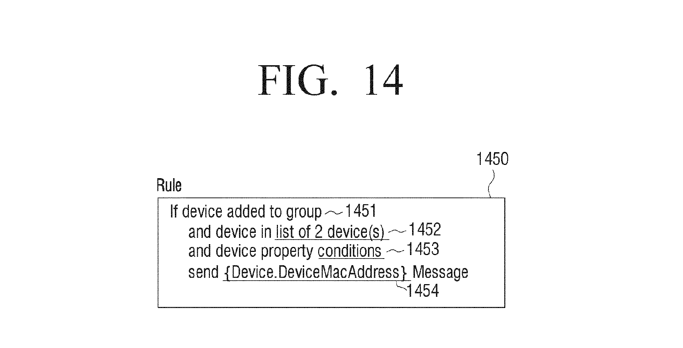

The region 1450 to display the string command is described by referring to FIG. 14.

Referring to FIG. 14, the region 1450 to display the string command includes a region 1451 to display the selected first condition, regions 1452 and 1453 to display the selected second condition, and a region 1454 to display the selected function.

In the region 1450 to display the string command, the user can easily perceive the rule of the new service being generated.

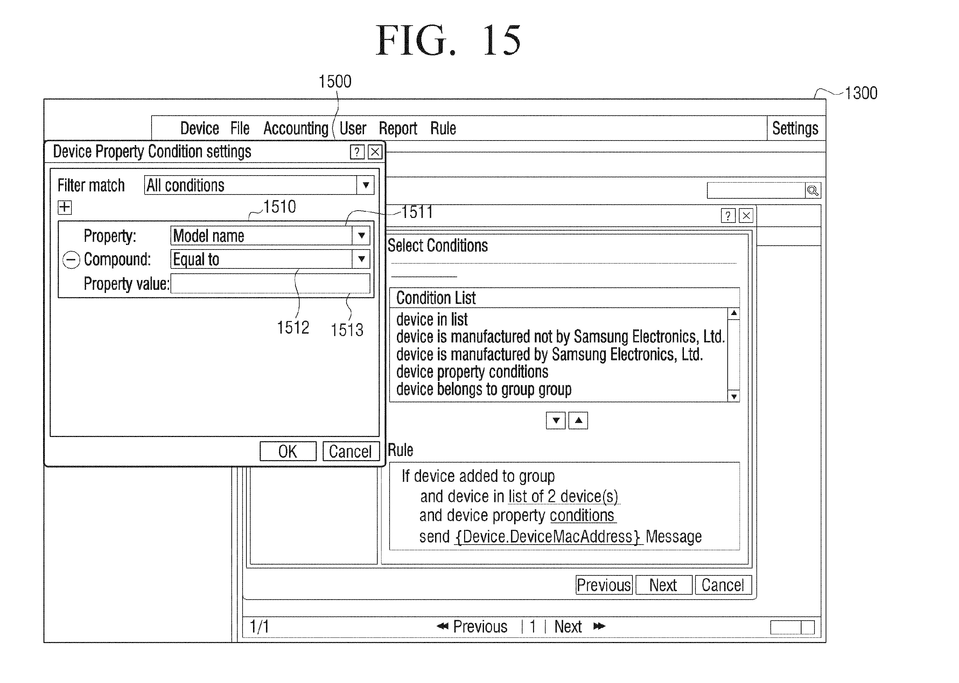

Referring to FIG. 14, the region 1453 to display the selected second condition does not record specific conditions. Hence, when the user selects the region 1453 displaying the second condition, a user interface window 1500 of FIG. 15 is displayed.

Referring to FIG. 15, the user interface window 1500 includes regions 1510, 1520 and 1530 to select specific setting values for the selected second condition.

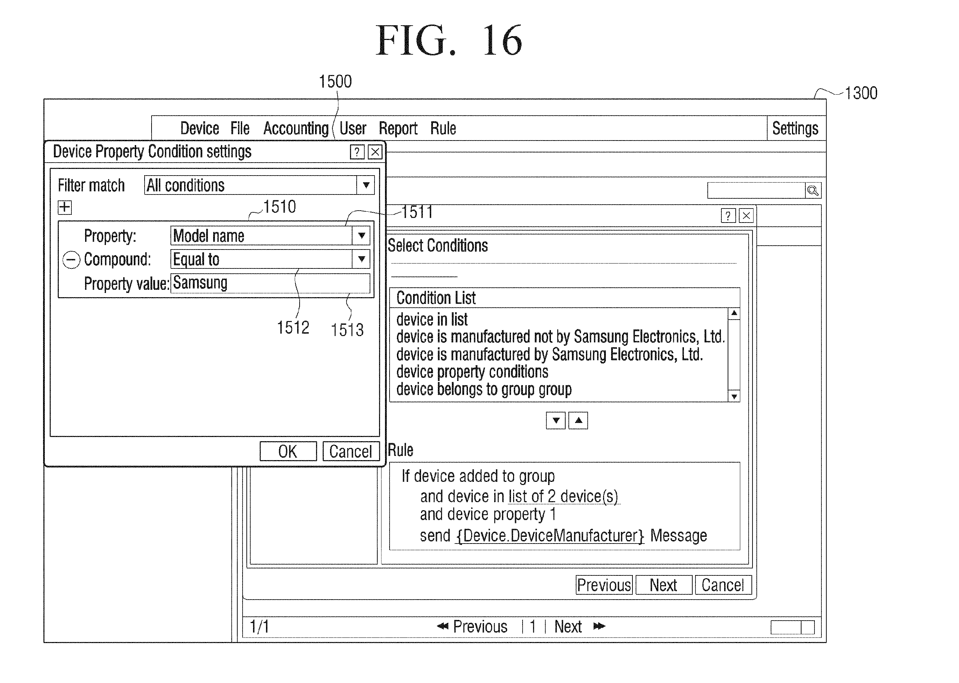

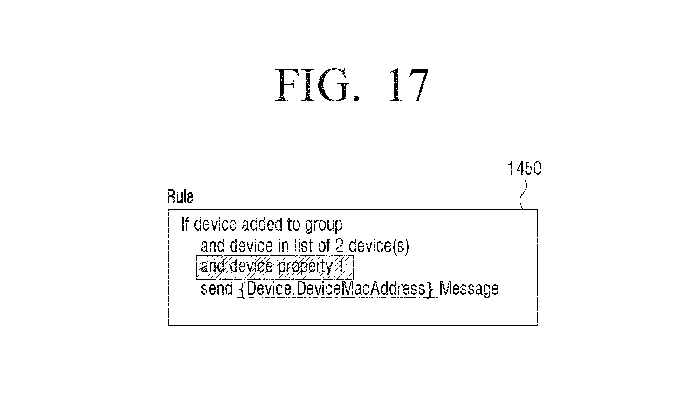

The user can set the specific second condition through the user interface window 1500. The specific setting value for the second condition input by the user is illustrated in FIG. 16. When such a setting value is input, the region to display the string command of FIG. 17 is changed to the region 1453 to display the second condition.

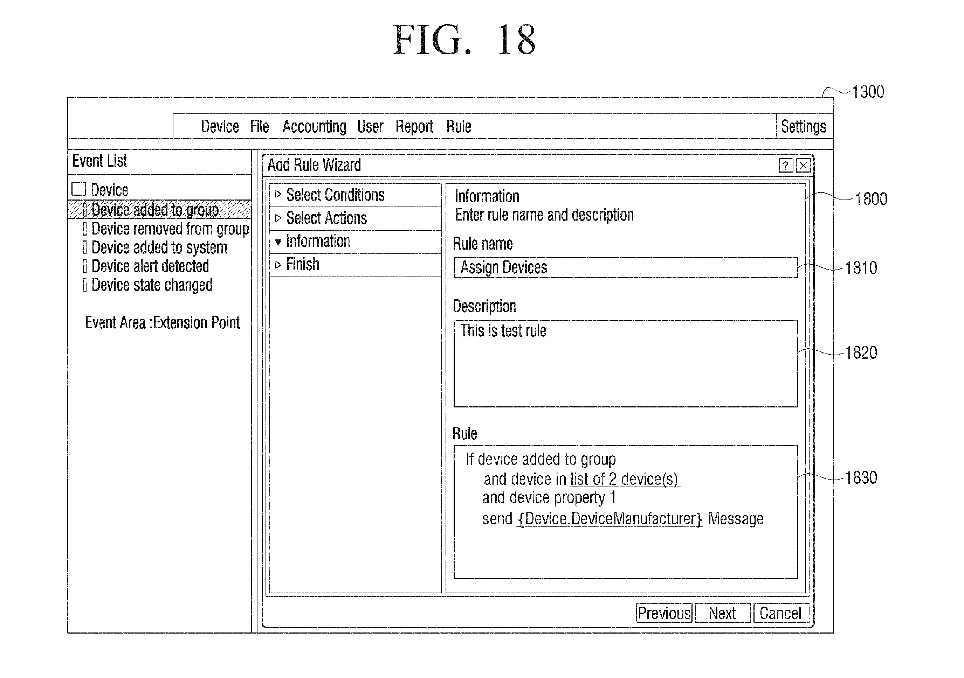

Hence, when the second condition and the function are selected and the division region 1430 is selected, the user interface window 1300 of FIG. 18 can be displayed.

Referring to FIG. 18, a user interface window 1800 includes a region 1810 to input a rule name, a region 1820 to input a rule description, and a region 1830 to display the string command for the input first condition, second condition, and function.

When the first condition, the second condition, and the function are selected as above, the virtual bundle including the first condition, the second condition, and the function is generated as mentioned earlier.

FIG. 19 is a diagram illustrating a structure of a new bundle generated according to a new rule.

Referring to FIG. 19, a pre-installed bundle 165-6 corresponds to the first condition, the pre-installed bundle 165-5 corresponds to the second condition, and the pre-installed bundle 165-7 corresponds to the function.

When the new service is generated, the user merely selects the function provided by the pre-installed bundle. The OSGi open platform has the information of the pre-installed bundle corresponding to each condition and function, and can provide the new service using the connection information between the bundles corresponding to the first condition, the second condition, and the function selected by the user as illustrated in FIG. 19. As such, the new service can be registered by setting the OSGi, or may be registered by generating and installing the new bundle on the OSGi framework.

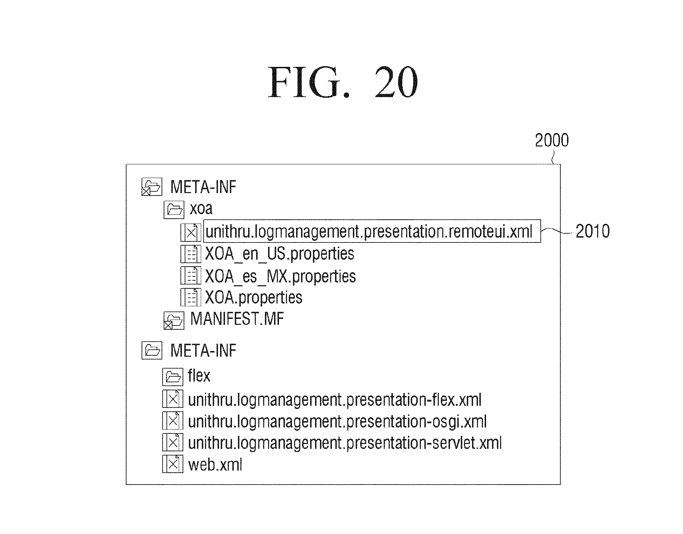

FIGS. 20 through 22 are diagrams illustrating a file structure 2000 of a bundle according to an embodiment of the present general inventive concept.

Each bundle manages an extension function using the an XML-based interface provided in the OSGi and a function of extending the UI of each bundle to separately generate a basic XML standardization file in a presentation layer, to parse the file in the platform which is the intermediate lower layer, and to read information thereof.

Hence, the general OSGi system requires the XML file such as xxx-flex.xml , xxx-osgi.xml , xxx-servlet.xml , and web.xml.

Besides the basic xml, it is possible to combine the function of the other bundle by adding xxx.remoteui.xml.

Accordingly, the virtual bundle according to an embodiment of the present general inventive concept includes an XML statement 2010 (a file remotui.xml, that is, unithru.logmanagement.presentation,remoteui.xml) which refers to the requisite XML and the other bundle.

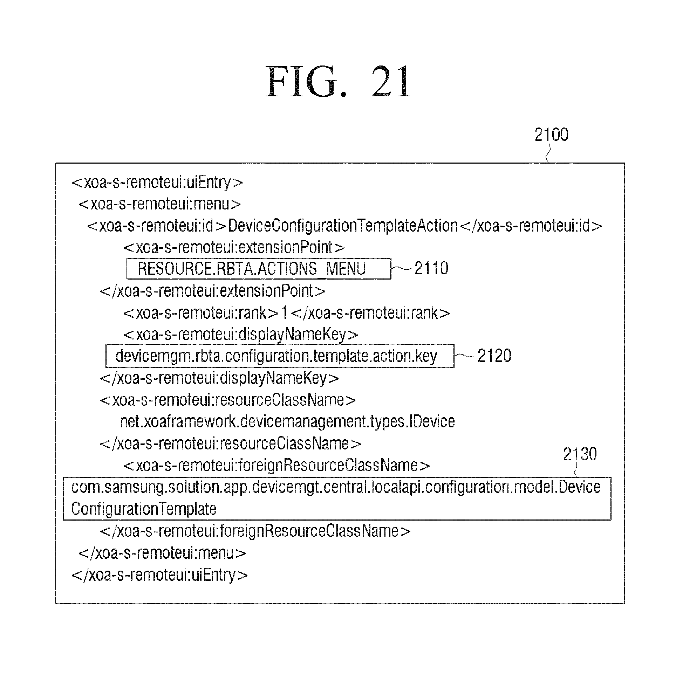

An example of the XML statement 2010 corresponding to the file remotui.xml of FIG. 20 is illustrated in FIG. 21.

Hence, the OSGi open platform registers a function (Action) to the Open Platform in a declared value 2110 using "RESOURCE.RBTA.ACTIONS_MENU". A value indicated in an XML statement 2120 by the function (Action) can be displayed per language selected by "devicemgm.rbta.configuration.template.action.key" using the key value. Herein, "DeviceConfigurationTemplateAction" is the key value and links the XML value for connecting the screen required for the user to set a specific value.

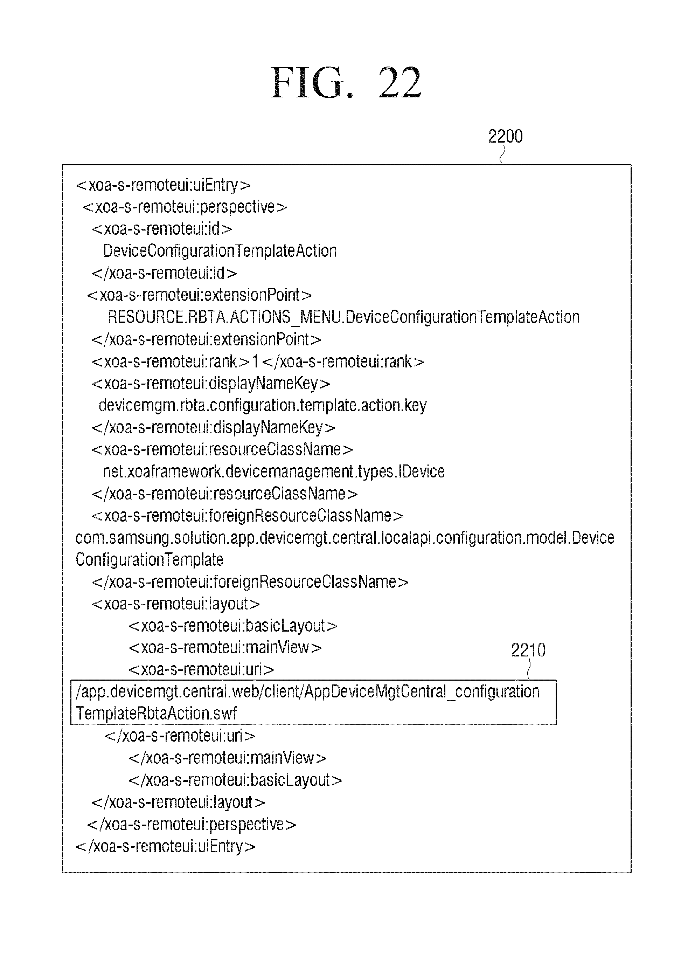

An XML statement 2130 corresponding to a higher key value 'DeviceConfigurationTemplateAction' is connected to declare an address of the pop-up window connected when the user clicks the linked screen in order to set the specific value in the UI environment, which is represented as "/app.devicemgt.central.web/client/AppDeviceMgtCentral_configurationTemplateRbt aAction.swf" as illustrated in FIG. 22.

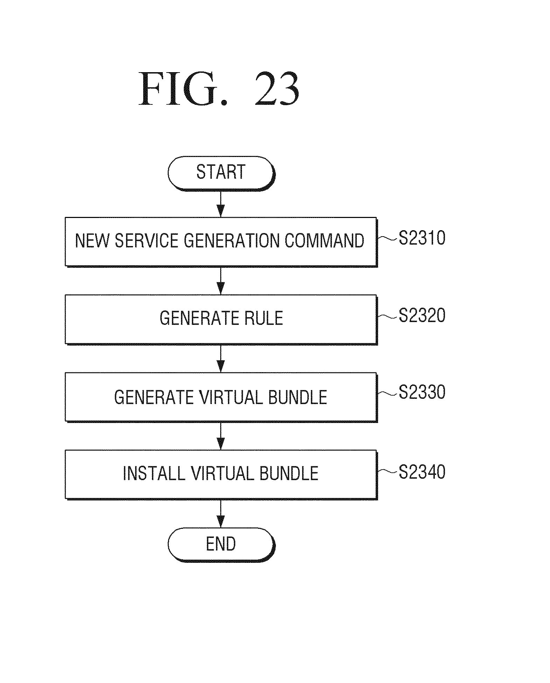

FIG. 23 is a flowchart illustrating a method of installing a service according to an embodiment of the present general inventive concept.

Referring to FIG. 23, a new service generation command is input at operation S2310.

When the new service generation command is input, the new rule is input at operation S2320. The user may select the first condition, the second condition, and the function as illustrated in FIGS. 12 through 18.

The virtual bundle is generated according to the selected new rule at operation S2330, and the generated virtual bundle is installed on the OSGi platform at operation S2340.

The service installation method according to an embodiment of the present general inventive concept can generate the new service merely by selecting the first condition, the second condition, and the function through the user interface window, to thus enhance the user convenience. Also, the service installation method can filter the main function using the second condition more minutely, rather than immediately performing the particular function corresponding to the particular event. The service installation method of FIG. 23 can be realized on the management server of FIG. 2 or the image forming apparatus of FIG. 3, or may be executed on other management server or other image forming apparatus.

The service installation method as stated above can be embodied as at least one execution program for executing the service installation method, and the execution program can be stored to a computer-readable recording medium.

Accordingly, the blocks of the present general inventive concept can be realized as computer-readable codes on the computer-readable recording medium. The computer-readable recording medium can be a device capable of storing data readable by a computer system.

For example, the computer-readable recording medium can include ROM, RAM, CD-ROMs, magnetic tapes, floppy discs, optical discs, optical data storage devices, and image display devices including the storage device such as TV. The computer-readable codes can be embodied as a computer data signal of carrier.

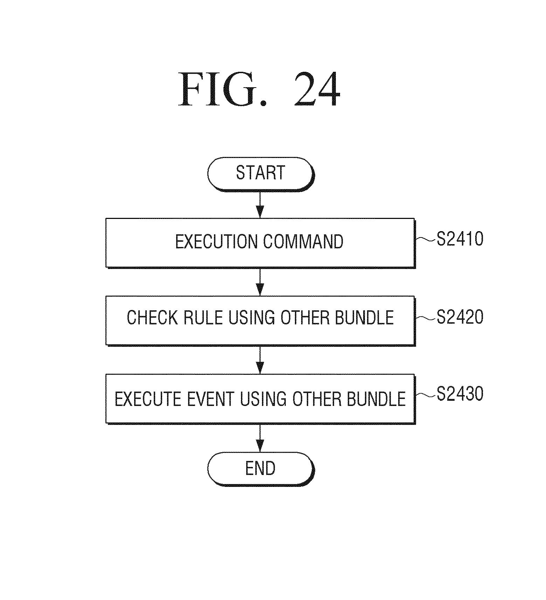

FIG. 24 is a flowchart illustrating a method of providing a service according to an embodiment of the present general inventive concept.

Referring to FIG. 24, when a new service is registered as illustrated in FIG. 23 and the corresponding service is initiated at operation S2410, the method determines whether the event corresponding to the first condition and the second condition occurs, using the service engine of the bundles corresponding to the first condition and the second condition selected at operation S2420.

When the event corresponding to the first condition and the second condition occurs, the method conducts the service corresponding to the function using the engine of the preset bundle corresponding to the function of the new service at operation S2430.

The service providing method according to an embodiment of the present general inventive concept can generate the new service merely by selecting the first condition, the second condition, and the function through the user interface window, to thus enhance the user convenience. Also, the service providing method can filter the main function using the second condition more minutely, rather than immediately performing the particular function corresponding to the particular event. The service providing method of FIG. 24 can be realized on the management server of FIG. 2 or the image forming apparatus of FIG. 3, or may be executed on other management server or other image forming apparatus.

The present general inventive concept can also be embodied as computer-readable codes on a computer-readable medium. The computer-readable medium can include a computer-readable recording medium and a computer-readable transmission medium. The computer-readable recording medium is any data storage device that can store data as a program which can be thereafter read by a computer system. Examples of the computer-readable recording medium include read-only memory (ROM), random-access memory (RAM), CD-ROMs, magnetic tapes, floppy disks, and optical data storage devices. The computer-readable recording medium can also be distributed over network coupled computer systems so that the computer-readable code is stored and executed in a distributed fashion. The computer-readable transmission medium can transmit carrier waves or signals (e.g., wired or wireless data transmission through the Internet). Also, functional programs, codes, and code segments to accomplish the present general inventive concept can be easily construed by programmers skilled in the art to which the present general inventive concept pertains.

Although a few embodiments of the present general inventive concept have been shown and described, it will be appreciated by those skilled in the art that changes may be made in these embodiments without departing from the principles of the general inventive concept, the scope of which is defined in the appended claims and their equivalents.

## Claims

1. A management server arranged to provide an Open Service Gateway Initiative (OSGi)-based service, comprising:
a user interface unit configured to select a possible event of the management server as a first condition, to select a second condition to filter an event corresponding to the selected first condition, and to select a function to be executed by the management server when the first condition and the second condition are satisfied; and
a control unit arranged to set the selected first condition, second condition, and function as a single new service in the management server,
wherein the first condition, the second condition, and the function each use a service engine of a bundle pre-installed on the OSGi.

2. The management server of claim 1, wherein the user interface unit is arranged to display a plurality of possible events of the management server, and selects at least one of the displayed events as the first condition.

3. The management server of claim 1 or claim 2, wherein the event is at least one of an event to detect a new image forming apparatus, an event to detect an alert in the image forming apparatus managed by the management server, an event to change a state of the image forming apparatus managed by the management server, an event to add a new image forming apparatus to a management group managed by the management server, and an event to remove an image forming apparatus from the management group managed by the management server.

4. The management server of claim 2 or claim 3, wherein, when the first condition is satisfied, the user interface unit is arranged to display a plurality of filtering conditions for an event corresponding to the selected first condition, and to select at least one of the displayed filter conditions as the second condition.

5. The management server of claim 4, wherein the user interface unit is arranged to display a plurality of functions supported by the management server, and to select at least one of the displayed functions as a function to be executed by the management server when the first condition and the second condition are satisfied.

6. The management server of any one of claims 1 to 5, wherein the control unit is arranged to generate a string command corresponding to the selected first condition, second condition, and function, and
the user interface unit is arranged to display the generated string command.

7. The management server of any one of claims 1 to 6, wherein the control unit is arranged to detect whether an event corresponding to the selected first condition occurs, using the service engine of the bundle corresponding to the first condition, and when the event corresponding to the first condition occurs, is arranged to detect whether the event is in a status corresponding to the selected second condition, using the service engine of the bundle corresponding to the second condition.

8. The management server of claim 7, wherein, when detecting the first condition and the second condition, the control unit is arranged to perform a service corresponding to the function using the service engine of the bundle corresponding to the function.

9. The management server of any one of claims 1 to 8, further comprising:
a generation unit arranged to generate a virtual bundle which comprises only information for connection to the bundles corresponding to the selected first condition, second condition, and function; and
an installation unit arranged to install the generated virtual bundle on the OSGi framework.

10. An image forming apparatus arranged to provide an Open Service Gateway Initiative (OSGi)-based service, comprising:
a user interface unit configured to select a possible event of the image forming apparatus as a first condition, to select a second condition to filter an event corresponding to the selected first condition, and to select a function to be executed by the image forming apparatus when the first condition and the second condition are satisfied; and
a control unit arranged to set the selected first condition, second condition, and function as a single new service in the image forming apparatus,
wherein the first condition, the second condition, and the function each use a service engine of a bundle pre-installed on the OSGi.

11. A method of providing an Open Service Gateway Initiative (OSGi)-based service in a management server, the method comprising:
selecting a possible event of the management server as a first condition;
selecting a second condition for filtering an event corresponding to the selected first condition;
selecting a function to be executed by the management server when the first condition and the second condition are satisfied; and
setting the selected first condition, second condition, and function as a single new service in the management server,
wherein the first condition, the second condition, and the function each use a service engine of a bundle pre-installed on the OSGi.

12. The method of claim 11, wherein the selecting the first condition includes displaying a plurality of possible events of the management server, and selecting at least one of the displayed events as the first condition.

13. The method of claim 12, wherein, when the first condition is satisfied, the selecting the second condition includes displaying a plurality of filtering conditions for an event corresponding to the selected first condition, and selecting at least one of the displayed filter conditions as the second condition.

14. The method of claim 13, wherein the selecting the function includes displaying a plurality of functions supported by the management server, and selecting at least one of the displayed functions as a function to be executed by the management server when the first condition and the second condition are satisfied.

15. The method of any one of claims 11 to 14, wherein the setting in the management server comprises:
generating a virtual bundle which comprises only information for connection to the bundles corresponding to the selected first condition, second condition, and function; and
installing the generated virtual bundle on the OSGi framework.
